# EUROPEAN PATENT SPECIFICATION

(11) **EP 2 779 300 B1**
(45) Date of publication and mention of the grant of the patent: **30.05.2018**
(21) Application number: 14158349.2
(22) Date of filing: 07.03.2014
(51) Int. Cl.: H01M 10/0587, H01M 2/26, H01M 10/04, H01M 10/0525

(54) **Drop and vibration resistant electrochemical cell**
Abfall- und vibrationsbeständige elektrochemische Zelle
Cellule électrochimique résistante aux vibrations et aux chutes

(30) Priority: 15.03.2013 US 201313835263
(43) Date of publication of application: 17.09.2014
(73) Proprietor: SAFT, 93170 Bagnolet (FR)
(72) Inventor: Kelley, Daniel, York, PA, MD 21030 (US); Deveney, Bridget, Baltimore, MD 21218 (US); Addison, David, Baltimore, MD 21030 (US)
(74) Representative: Hirsch & Associés

(56) References cited:
- WO-A2-2012/102586
- JP-A- 2011 238 569

## Description

### BACKGROUND OF THE INVENTION

### Field of the Invention

The current disclosure relates to an electrochemical cell, including, without limitation, an electrochemical cell that is drop and vibration resistant.

### Background

Some conventional electrochemical cells include an electrode assembly (jelly roll) disposed inside of a case. These types of cells are vulnerable to various mechanical abuses, in particular shock and vibration.

That is, in certain applications, electrochemical cells are exposed to very high levels of vibration and/or mechanical shock, e.g. a space shuttle launching process. Such vibration or shock may cause the electrode assembly to move within the case causing the cell to fail due to, for example, breakage of welds within the cell, damage to the electrode material, bulging of the case and electrolyte leakage.

### SUMMARY

The present invention provides a drop and vibration resistant lithium ion battery that is able to survive severe vibration and mechanical shock conditions.

JP 2011-238569 discloses an electrochemical cell comprising an electrode assembly comprising a winding core, a positive electrode, a negative electrode, and a separator, the positive electrode, the negative electrode and the separator being wound around the winding core. A current collector is connected to the negative electrode. A case accommodates the wound electrode assembly and the current collector. The winding core is welded to the current collector. The current collector is welded to the case.

WO 2012/102586 discloses a method for manufacturing a tape and a battery for fixing an electrode assembly body. The tape for fixing an electrode assembly body realizes a three-dimensional shape through an electrolyte, thereby effectively fixing the electrode assembly body inside a can. Therefore, the tape prevents the electrode assembly from floating or rotating inside the can due to an external vibration or a shock, and prevents phenomena such as a damage of a tab in the welding regions or a disconnection of an internal circuit.

A first exemplary aspect of the present disclosure includes an electrochemical cell including an electrode assembly including a winding core, a first electrode, a second electrode, and a separator, the first electrode, the second electrode, and the separator being wound around the winding core, a current collector connected to the first electrode, a case that accommodates the wound electrode assembly and the current collector. The winding core is welded to the current collector which is welded to the case and the current collector includes an outer wall portion that extends around the current collector and has a diameter that is slightly larger than the inner diameter of the case and the current collector is press-fit into the case..

A second exemplary aspect of the present disclosure includes an electrochemical cell including a winding core extending in an axial direction, an electrode assembly including a first electrode and a second electrode wound around an outer circumference of the winding core, the wound electrode assembly having a first diameter, a case extending in the axial direction and having a second diameter that is greater than the first diameter, the case being configured to accommodate the wound electrode assembly. The winding core is mechanically fixed to the case and a current collector is welded to the case and includes an outer wall portion that extends around the current collector and has a diameter that is slightly larger than the inner diameter of the case and the current collector is press-fit into the case.

A third exemplary aspect of the present disclosure includes a method of making an electrochemical cell. The method includes welding a current collector to a winding core of an electrode assembly, inserting the wound electrode assembly into a case, and disposing a material, which swells, between the current collector and the case wherein the current collector has a diameter that is greater than an inner diameter of the case, and inserting the wound electrode assembly into the case comprises press-fitting the wound electrode assembly into the case so that the current collector radially displaces the case ; welding the current collector to an inner surface of the case.

### DRAWINGS

FIG. 1 shows a perspective view of an electrochemical cell according to an exemplary embodiment;
FIG. 2 shows a partial cross-sectional view of a bottom portion of the electrochemical cell shown in FIG. 1;
FIG. 3 shows a partial cross-sectional view of electrodes and separators for an electrochemical cell according to an exemplary embodiment; and
FIG 4 shows a detailed view of a current collector welded to the winding core according to an exemplary embodiment.

### DETAILED DESCRIPTION

Embodiments will be described below in more detail with reference to the accompanying drawings. The following detailed descriptions are provided to assist the reader in gaining a comprehensive understanding of the methods, apparatuses, and/or systems described herein and equivalent modifications thereof. Accordingly, various changes, modifications, and equivalents of the methods, apparatuses, and/or systems described herein will be apparent to those of ordinary skill in the art. Moreover, descriptions of well-known functions and constructions may be omitted for increased clarity and conciseness.

The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

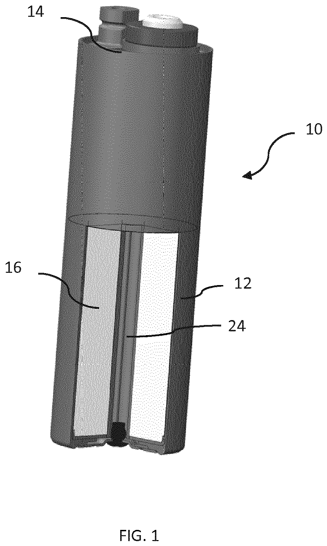

FIG. 1 shows a perspective view of an exemplary electrochemical cell 10. According to an exemplary embodiment, the cell 10 includes a container or case 12, a cap or cover 14, and a winding core or mandrel 24, and an electrode assembly 16 wound around the winding core 24.

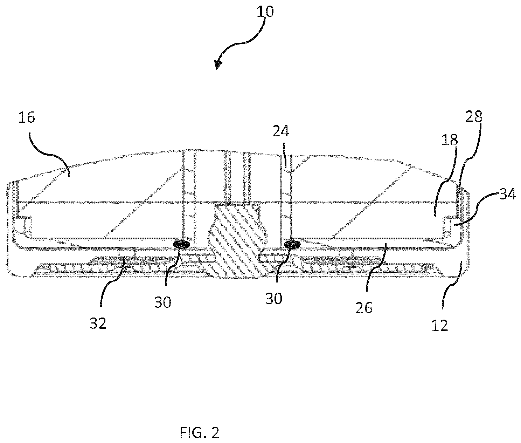

The electrode assembly 16 is a wound electrode assembly, commonly known as a jelly roll, which includes at least one cathode or positive electrode 18, at least one anode or negative electrode 20, and one or more separators 22 that are wrapped around the winding core 24. The one or more separators 22 are provided intermediate or between the positive and negative electrodes 18, 20 to electrically isolate the electrodes from each other. According to an exemplary embodiment, the cell 10 includes an electrolyte (not shown) within the case 12. In addition, to securely retain the electrode assembly 16 in the case 12, the winding core 24 is welded to the current collector or bussing washer 26, as illustrated in FIG. 2. Also, a material 28, which swells when contacted by the electrolyte, may be provided between the outside of the electrode assembly 16 and the inside wall of the case 12 to snugly retain the electrode assembly 16 in the case 12. This aspect of the invention is discussed in greater detail below.

Although the winding core 24 is shown as being provided as having a generally cylindrical shape, according to other exemplary embodiments, the winding core 24 may have a different configuration (e.g., it may have an oval or rectangular cross-section shape, etc.). It is noted that the electrode assembly 16, although shown as having a generally cylindrical shape, may also have a different configuration (e.g., it may have an oval, rectangular, or other desired cross-section shape).

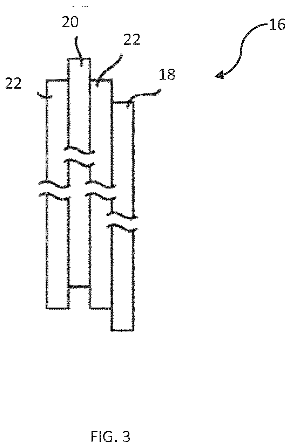

The positive electrode 18 is offset from the negative electrode 20 in the axial direction as shown in the partial cross-sectional view shown in FIG. 3. Accordingly, at a first end of the electrode assembly 16, the wound positive electrode 18 will extend further than the negative electrode 20, and at a second (opposite) end of the electrode assembly 16, the negative electrode 20 will extend further than the positive electrode 18. Accordingly, that current collectors may be connected to a specific electrode at one end of the cell without contacting the opposite polarity electrode.

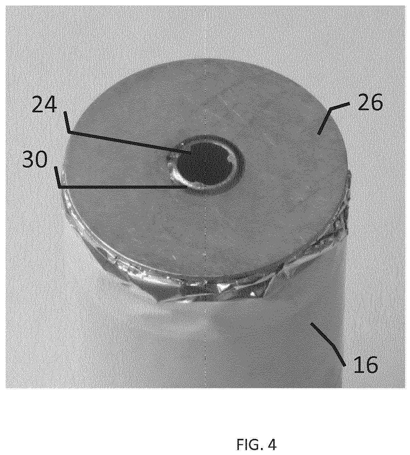

FIG. 2 shows a partial cross-sectional view of the closed bottom portion of the electrochemical cell 10 including the current collector 26. The current collector 26 has an annular shape and fits over the end of the electrode assembly 16 such that it contacts either the positive electrode 18 or negative electrode 20 extending from the electrode assembly 16. The winding core 24 may be mechanically fixed to the case 12. Specifically, the center portion of the current collector 26 is welded to the end of the winding core 24 at weld 30, as shown in FIG. 4. The weld 30 is preferably annular as shown, but may instead include individual welds at different locations around the interface between the current collector 26 and the winding core 24. In addition, the current collector 26 is welded to the case 12 at weld 32 or any other convenient location where the current collector 26 contacts the case 12 to thereby mechanically fix the winding core 24 to the case 12. Furthermore, in another exemplary embodiment, the winding core 24 is mechanically fixed to the case 12 directly welding the winding core 24 to the case 12. In this exemplary embodiment, electrochemical
cell 10 may not include a current collector disposed between direct weld of the winding core 24 to the case 12. By virtue of these designs, the electrode assembly 16 is securely retained in the case 12 to improve its resistance to shock and vibration. The welds 30 and 32 may be made by, for example, laser welding, but any welding technique would suffice.

The current collector 26 includes an outer wall portion 34 that extends around the current collector 26 and has a diameter that is slightly larger than the inner diameter of the case 12. Prior to sealing the cover 14 to the top (first distal end) of the case 12, the top of the case 12 has an opening that is configured to receive the electrode assembly 16 and the current collector 26. When the current collector 26 is press-fit into the case 12, the current collector 26 radially displaces the case 12. In this manner, a pressure caused by the interference between the current collector 26 and the case 12 increases the inner diameter of the case 12 and decreases the diameter of the current collector 26. This further assists in stabilizing the electrode assembly 16 in the case 12.

As noted above, material 28 is provided around the outside of the jelly roll electrode assembly 16 such that it is sandwiched between the electrode assembly 16 and the case 12. The material 28 swells when the case 12 is filled with electrolyte to further secure the electrode assembly 16 in the case 12 and act as a cushion to shock or vibration. The material 28 may be such that when contacted by the electrolyte it also becomes sticky, thereby causing the electrode assembly 16 to adhere to the inner surface of the case 12 and further protect against high vibration and mechanical shock.

Examples of the swellable material 28 include a highly soluble polymer material, such as, for example, polyvinyldifluride (PVdF), a polymer compound including a functional atom group such as an ester group and a carboxyl group, carboxymethylcellulose (CMC), styrene butadiene rubber (SBR latex), ethylene-propylene-diene methylene linkage (EPDM), etc.

The material 28 may be applied to an outer circumference of the jelly roll electrode assembly 16. For example, according to one exemplary embodiment, the material 28 may be considered to be a tape that is adhered to the electrode assembly 16. Alternatively, the material 28 may also be a coating material that coats an outer circumference of the electrode assembly 16.

According to other exemplary embodiments, the material 28 may be applied to an inner surface of the case 12. For example, according to one exemplary embodiment, the material 28 is considered to be a tape that is provided on an inner surface of the case 11 between the case 11 and the electrode assembly 16. According to another exemplary embodiment, the material 28 is considered to be a coating material that is coated on an inner surface of the case 11 between the case 11 and the electrode assembly 16.

Exemplary embodiments described above are an improvement over the conventional electromechanical cells. For example, the inventors conducted a vibration test which demonstrated that the conventional cell, without the above described weld 30 and swellable material 28, failed after fifteen seconds when vibrated to 54 Gᵣₘₛ (root-mean-square acceleration) in a single direction. In contrast, an exemplary electrochemical cell including the swellable material 28 and the current collector 26 welded to the winding core 24 at weld 30 survived six minutes under the same vibration parameters, well beyond a three minute per vibration direction threshold needed in some high vibration applications.

More specifically, lithium ion cells were vibration tested in the Z (parallel to the axis of the cell) axis to a customer-specific profile with amplitude 54 Gᵣₘₛ. The cells were mounted into a rigid aluminum block by way of resin potting thereby connecting the cell case wall to the rigid block. The rigid block was then mounted directly to a vibration armature and the testing was completed at room temperature. The fixtures and cells were affixed with accelerometers, where possible, and the cells were monitored for voltage drop during the test in order to determine if a disconnect had occurred within the cell. The testing was continued for 3 minutes in the Z axis or until a failure occurred. If no failure occurred, the testing was repeated for X and Y axes (perpendicular axes perpendicular to the axis of the cell). Conventional cells without the above-mentioned features failed due to electrical disconnect consistently at roughly 15 seconds into the vibration testing. Constraining the top and bottom of the conventional cells externally (mimicking a thick cover and case bottom) extended the runtime to two minutes (120 seconds) when implemented on a conventional cell (still not meeting the 3 minute requirement needed in some high vibration applications). However, when the above-mentioned vibration testing was implemented on multiple exemplary electrochemical cells, each including the swellable material 28 and the current collector 26 welded to the winding core 24 at weld 30, each saw an in increase in longevity without electrical disconnect during the vibration testing. Specifically, each of the exemplary electrochemical cells was able to withstand the 3 minutes of 54 Gᵣₘₛ vibration testing in each of three mutually-perpendicular axes. During this testing at three minutes per axis, the exemplary electrochemical cells did not show voltage fluctuations which would indicate a cell disconnect internally.

Although the inventive concept has been described above with respect to the various embodiments, it is noted that there can be a variety of permutations and modifications of the described features by those who are familiar with this field, without departing from the technical ideas and scope of the features, which shall be defined by the appended claims.

## Claims

1. An electrochemical cell comprising:
an electrode assembly comprising a winding core, a first electrode, a second electrode, and a separator, the first electrode, the second electrode and the separator being wound around the winding core;
a current collector connected to the first electrode; and
a case that accommodates the wound electrode assembly and the current collector,
wherein the winding core is welded to the current collector, the current collector is welded to the case, **characterized in that** the current collector includes an outer wall portion that extends around the current collector and has a diameter that is slightly larger than the inner diameter of the case and the current collector is press-fit into the case.

2. The electrochemical cell according to claim 1, further comprising a material disposed between an inner surface of the case and the wound electrode assembly, wherein
the material swells in response to the case being filled with electrolyte.

3. The electrochemical cell according to claim 2, wherein the material is a tape wrapped around the wound electrode assembly that adheres to the case in response to being contacted by the electrolyte.

4. The electrochemical cell according to claim 2, wherein the material coats an outer circumference of the wound electrode assembly.

5. The electrochemical cell according to claim 4, wherein the material adheres to the case in response to being contacted by the electrolyte.

6. The electrochemical cell according to claim 1, wherein the current collector includes an outer edge that is distal to the weld between the current collector and the winding core.

7. The electrochemical cell according to claim 1, wherein the case includes a first distal end having an opening that is configured to receive the wound electrode assembly and the current collector, and the current collector radially displaces the case when the current collector is inserted into the case.

8. The electrochemical cell according to claim 7, wherein the current collector has a circumference that is greater than a circumference of the wound electrode assembly and less than a circumference of an inner portion of the case.

9. An electrochemical cell including:
a winding core extending in an axial direction;
an electrode assembly including a first electrode and a second electrode wound around an outer circumference of the winding core, the wound electrode assembly having a first diameter;
a case extending in the axial direction and having a second diameter that is greater than the first diameter, the case being configured to accommodate the wound electrode assembly; and
wherein the winding core is mechanically fixed to the case and a current collector is welded to the case, **characterized in that** the current collector includes an outer wall portion that extends around the current collector and has a diameter that is slightly larger than the inner diameter of the case and the current collector is press-fit into the case.

10. The electrochemical cell according to claim 9, further comprising:
a material disposed between the wound electrode assembly and the case, wherein
in response to electrolyte being introduced into the case, the material swells and causes the wound electrode assembly to adhere to an inner surface of the case.

11. The electrochemical cell according to claim 9, further comprising a current collector welded to the winding core.

12. The electrochemical cell according to claim 11, wherein the current collector is further welded to an inner surface of the case to thereby mechanically fix the winding core to the case.

13. A method of making an electrochemical cell, the method comprising:
welding a current collector to a winding core of an electrode assembly;
inserting the wound electrode assembly into a case; and
disposing a material, which swells between the current collector and the case
the current collector has a diameter that is greater than an inner diameter of the case, and
inserting the wound electrode assembly into the case comprises press-fitting the wound electrode assembly into the case so that the current collector radially displaces the case ;
welding the current collector to an inner surface of the case.

14. The method of making an electrochemical cell according to claim 13, wherein the material becomes adhesive in response to electrolyte.

15. The method of making an electrochemical cell according to claim 13, wherein disposing the material comprises applying the material to the wound electrode assembly.

16. The method of making an electrochemical cell according to claim 13, wherein disposing the material comprises applying the material to an inner surface of the case.

## Patentansprüche

1. Eine elektrochemische Zelle, umfassend:
- eine Elektrodenanordnung, die einen Wickelkern, eine erste Elektrode, eine zweite Elektrode und einen Separator umfasst, wobei die erste Elektrode, die zweite Elektrode und der Separator um den Wickelkern herum gewickelt sind;
- einen Stromkollektor, der mit der ersten Elektrode verbunden ist; und
- ein Gehäuse, das die gewickelte Elektrodenanordnung und den Stromkollektor aufnimmt,
wobei der Wickelkern an den Stromkollektor geschweißt ist, und wobei der Stromkollektor an das Gehäuse geschweißt ist, **dadurch gekennzeichnet dass** der Stromkollektor einen äußeren Wandabschnitt umfasst, der sich um den Stromkollektor herum erstreckt und einen Durchmesser aufweist, der etwas größer als der Innendurchmesser des Gehäuses ist, und dass der Stromkollektor in das Gehäuse pressgepasst ist.

2. Die elektrochemische Zelle nach Anspruch 1, ferner umfassend ein Material das zwischen einer Innenfläche des Gehäuses und der gewickelten Elektrodenanordnung angeordnet ist, wobei das Material, als Reaktion auf die Einfüllung des Gehäuses mit Elektrolyt aufquillt.

3. Die elektrochemische Zelle nach Anspruch 2, wobei das Material ein, um die gewickelte Elektrodenanordnung herum gewickeltes Band ist, welches, als Reaktion auf das In-Kontakt-Bringen mit dem Elektrolyten, am Gehäuse anhaftet.

4. Die elektrochemische Zelle nach Anspruch 2, wobei das Material einen Außenumfang der gewickelten Elektrodenanordnung beschichtet.

5. Die elektrochemische Zelle nach Anspruch 4, wobei das Material als Reaktion auf das In-Kontakt-Bringen mit dem Elektrolyten am Gehäuse anhaftet.

6. Die elektrochemische Zelle nach Anspruch 1, wobei der Stromkollektor eine Außenkante umfasst, die distal zur, zwischen dem Stromkollektor und dem Wickelkern liegenden Schweißstelle angeordnet ist.

7. Die elektrochemische Zelle nach Anspruch 1, wobei das Gehäuse ein erstes distales Ende umfasst, welches eine Öffnung aufweist die konfiguriert ist um die gewickelte Elektrodenanordnung und den Stromkollektor aufzunehmen, und wobei der Stromkollektor das Gehäuse radial verschiebt wenn der Stromkollektor in das Gehäuse eingefügt wird.

8. Die elektrochemische Zelle nach Anspruch 7, wobei der Stromkollektor einen Umfang aufweist, der größer als ein Umfang der gewickelten Elektrodenanordnung und kleiner als ein Umfang eines inneren Abschnitts des Gehäuses ist.

9. Eine elektrochemische Zelle, umfassend:
- einen Wickelkern, der sich in einer axialen Richtung erstreckt;
- eine Elektrodenanordnung, die eine erste Elektrode und eine zweite Elektrode umfasst, die um einen Außenumfang des Wickelkerns herum gewickelt sind, wobei die gewickelte Elektrodenanordnung einen ersten Durchmesser aufweist;
- ein Gehäuse, das sich in einer axialen Richtung erstreckt und einen zweiten Durchmesser aufweist, der größer als der erste Durchmesser ist, wobei das Gehäuse konfiguriert ist um die gewickelte Elektrodenanordnung aufzunehmen; und
wobei der Wickelkern mechanisch an dem Gehäuse befestigt ist und ein Stromkollektor an das Gehäuse geschweißt ist, **dadurch gekennzeichnet dass** der Stromkollektor einen äußeren Wandabschnitt umfasst, der sich um den Stromkollektor herum erstreckt und einen Durchmesser aufweist, der etwas größer als der Innendurchmesser des Gehäuses ist, und dass der Stromkollektor in das Gehäuse pressgepasst ist.

10. Die elektrochemische Zelle nach Anspruch 9, ferner umfassend:
- ein Material, das zwischen der gewickelten Elektrodenanordnung und dem Gehäuse angeordnet ist,
wobei das Material, als Reaktion auf die Einfüllung des Gehäuses mit Elektrolyt aufquillt und es bewirkt, dass die gewickelte Elektrodenanordnung an einer Innenfläche des Gehäuses anhaftet.

11. Die elektrochemische Zelle nach Anspruch 9, ferner umfassend einen Stromkollektor der an den Wickelkern geschweißt ist.

12. Die elektrochemische Zelle nach Anspruch 11, wobei der Stromkollektor ferner an eine Innenfläche des Gehäuses geschweißt ist, um damit den Wickelkern mechanisch an das Gehäuse zu befestigen.

13. Ein Verfahren zur Herstellung einer elektrochemischen Zelle, wobei das Verfahren Folgendes umfasst:
- das Schweißen eines Stromkollektors an einen Wickelkern einer Elektrodenanordnung;
- das Einführen der gewickelten Elektrodenanordnung in ein Gehäuse; und
- das Anordnen eines Materials, welches zwischen dem Stromkollektor und dem Gehäuse aufquillt,
wobei der Stromkollektor einen Durchmesser aufweist der größer als der Durchmesser des Gehäuses ist, und wobei das Einführen der gewickelten Elektrodenanordnung in das Gehäuse die Presspassung der gewickelten Elektrodenanordnung in das Gehäuse umfasst, damit der Stromkollektor das Gehäuse radial verschiebt;
- das Schweißen eines Stromkollektors an eine Innenfläche des Gehäuses.

14. Das Verfahren zur Herstellung einer elektrochemischen Zelle nach Anspruch 13, wobei das Material als Reaktion auf den Elektrolyten anhaftend wird.

15. Das Verfahren zur Herstellung einer elektrochemischen Zelle nach Anspruch 13, wobei das Anordnen des Materials das Aufbringen des Materials auf die gewickelte Elektrodenanordnung umfasst.

16. Das Verfahren zur Herstellung einer elektrochemischen Zelle nach Anspruch 13, wobei das Anordnen des Materials das Aufbringen des Materials auf eine Innenfläche des Gehäuses umfasst.

## Revendications

1. Elément électrochimique comprenant :
un ensemble d'électrodes comprenant un noyau d'enroulement, une première électrode, une deuxième électrode, et un séparateur, la première électrode, la deuxième électrode et le séparateur étant enroulés autour du noyau d'enroulement ;
un collecteur de courant connecté à la première électrode ; et
un boîtier qui loge l'ensemble d'électrodes enroulées et le collecteur de courant,
dans lequel le noyau d'enroulement est soudé au collecteur de courant, le collecteur de courant est soudé au boîtier, **caractérisé en ce que** le collecteur de courant comprend une partie de paroi extérieure qui s'étend autour du collecteur de courant et a un diamètre qui est légèrement plus grand que le diamètre intérieur du boîtier et le collecteur de courant est assemblé à la presse dans le boîtier.

2. Elément électrochimique selon la revendication 1, comprenant en outre un matériau disposé entre une surface intérieure du boîtier et l'ensemble d'électrodes enroulées, dans lequel
le matériau gonfle en réponse au remplissage du boîtier avec un électrolyte.

3. Elément électrochimique selon la revendication 2, dans lequel le matériau est une bande enroulée autour de l'ensemble d'électrodes enroulées qui adhère au boîtier en réponse à sa mise en contact avec l'électrolyte.

4. Elément électrochimique selon la revendication 2, dans lequel le matériau recouvre une circonférence extérieure de l'ensemble d'électrodes enroulées.

5. Elément électrochimique selon la revendication 4, dans lequel le matériau adhère au boîtier en réponse à sa mise en contact avec l'électrolyte.

6. Elément électrochimique selon la revendication 1, dans lequel le collecteur de courant comprend un bord extérieur qui est à distance de la soudure entre le collecteur de courant et le noyau d'enroulement.

7. Elément électrochimique selon la revendication 1, dans lequel le boîtier comprend une première extrémité distale comportant une ouverture qui est configurée pour recevoir l'ensemble d'électrodes enroulées et le collecteur de courant, et le collecteur de courant déplace radialement le boîtier lorsque le collecteur de courant est inséré dans le boîtier.

8. Elément électrochimique selon la revendication 7, dans lequel le collecteur de courant a une circonférence qui est plus grande qu'une circonférence de l'ensemble d'électrodes enroulées et plus petite qu'une circonférence d'une partie intérieure du boîtier.

9. Elément électrochimique comprenant :
un noyau d'enroulement s'étendant dans une direction axiale ;
un ensemble d'électrodes comprenant une première électrode et une deuxième électrode enroulées autour d'une circonférence extérieure du noyau d'enroulement, l'ensemble d'électrodes enroulées ayant un premier diamètre ;
un boîtier s'étendant dans la direction axiale et ayant un deuxième diamètre qui est plus grand que le premier diamètre, le boîtier étant configuré pour recevoir l'ensemble d'électrodes enroulées ; et
dans lequel le noyau d'enroulement est fixé mécaniquement au boîtier et un collecteur de courant est soudé au boîtier, **caractérisé en ce que** le collecteur de courant comprend une partie de paroi extérieure qui s'étend autour du collecteur de courant et a un diamètre qui est légèrement plus grand que le diamètre intérieur du boîtier et le collecteur de courant est assemblé à la presse dans le boîtier.

10. Elément électrochimique selon la revendication 9, comprenant en outre :
un matériau disposé entre l'ensemble d'électrodes enroulées et le boîtier, dans lequel
en réponse à l'introduction d'un électrolyte dans le boîtier, le matériau gonfle et amène l'ensemble d'électrodes enroulées à adhérer à une surface intérieure du boîtier.

11. Elément électrochimique selon la revendication 9, comprenant en outre un collecteur de courant soudé au noyau d'enroulement.

12. Elément électrochimique selon la revendication 11, dans lequel le collecteur de courant est en outre soudé à une surface intérieure du boîtier pour, de ce fait, fixer mécaniquement le noyau d'enroulement au boîtier.

13. Procédé de fabrication d'un élément électrochimique, le procédé comprenant :
le soudage d'un collecteur de courant à un noyau d'enroulement d'un ensemble d'électrodes ;
l'insertion de l'ensemble d'électrodes enroulées dans un boîtier ; et
la disposition d'un matériau, qui gonfle entre le collecteur de courant et le boîtier,
le collecteur de courant ayant un diamètre qui est plus grand qu'un diamètre intérieur du boîtier, et
l'insertion de l'ensemble d'électrodes enroulées dans le boîtier comprenant l'assemblage à la presse de l'ensemble d'électrodes enroulées dans le boîtier de sorte que le collecteur de courant déplace radialement le boîtier ;
le soudage du collecteur de courant à une surface intérieure du boîtier.

14. Procédé de fabrication d'un élément électrochimique selon la revendication 13, dans lequel le matériau devient adhésif en réaction à l'électrolyte.

15. Procédé de fabrication d'un élément électrochimique selon la revendication 13, dans lequel la disposition du matériau comprend l'application du matériau à l'ensemble d'électrodes enroulées.

16. Procédé de fabrication d'un élément électrochimique selon la revendication 13, dans lequel la disposition du matériau comprend l'application du matériau à une surface intérieure du boîtier.
